# EUROPEAN PATENT SPECIFICATION

(11) **EP 3 308 917 B1**
(45) Date of publication and mention of the grant of the patent: **03.05.2023**
(21) Application number: 17192536.5
(22) Date of filing: 22.09.2017
(51) Int. Cl.: B28B 1/00, B28B 1/50, B28B 1/52, B28B 7/00

(54) **BUILDING MATERIAL AND METHOD FOR PRODUCING BUILDING MATERIAL**
BAUMATERIAL UND VERFAHREN ZUR HERSTELLUNG DES BAUMATERIALS
MATÉRIAU DE CONSTRUCTION ET SON PROCÉDÉ DE PRODUCTION

(30) Priority: 28.09.2016 JP 2016189695; 28.09.2016 JP 2016189722
(43) Date of publication of application: 18.04.2018
(73) Proprietor: Nichiha Corporation, Nagoya-shi, Aichi 455-8550 (JP)
(72) Inventor: IKEDA, Satoshi, Nagoya-shi, Aichi 455-8550 (JP); KOSASA, Yoshinobu, Nagoya-shi, Aichi 455-8550 (JP)
(74) Representative: Isarpatent

(56) References cited:
- EP-B1- 1 330 580
- WO-A1-84/01402
- WO-A1-93/01931
- WO-A1-2016/000026

## Description

### BACKGROUND OF THE INVENTION

### 1. Field of the Invention

The present invention relates to a method for producing a building material.

### 2. Description of the Related Art

A ceramic siding board, a metal siding board, and ALC board (Autoclaved Lightweight aerated Concrete), and the like are used as building materials constituting an exterior wall or an interior wall of a building. Among these, the ceramic siding board is a building material for which an inorganic material such as a wood cement board, a cement excelsior board, a pulp fiber cement board, a wood chip cement calcium silicate board, a wood fiber cement calcium silicate board, or the like is used, and is excellent in terms of surface design.

Here, JP 2009-242189A describes a wood cement board composed of three layers, namely, a surface layer, a core layer, and a back layer, each of the layers being composed of a hydraulic material, a silica-containing material, and a wood reinforcement, and having an average specific gravity of 1.1 or more.

The wood cement board described in JP 2009-242189A has acute-angled and clear projections and depressions on its surface, and thus an effect of exhibiting excellent formability can be achieved. As used herein, "formability" means the ability to favorably form a pattern including projections and recesses such as an embossed pattern on the surface of the surface layer.

Meanwhile, JP S59-156705A describes a lightweight, thick-hardened product, which is an extrusion-molded article that has been reduced in weight by using a lightweight aggregate.

EP 1 330 580 B1 relates to to a composite building material comprising a lightweight core with a thin fiber cement facing on one side of the core and a second facing material on the other side.

WO 2016/000026 A1 discloses a method for forming a structural element comprising adding a mineral binder to an aqueous solution to form a cement, delivering the cement into a mould, and arranging at least one structural member with respect to the cement in the mould such that the cement is able to bind to the at least one structural member, maybe also forming a core.

WO 93/01931 A1 discloses a composite structural material and a method of making a low cost, lightweight, ductile, long lasting, crack resistant, composite structural material which consists of a core constructed from lightweight, expanded foam.

WO 84/01402 A1 relates to a structural member having a core material made from a foamed or unfoamed slurry of cement and water into which is homogenously incorporated foamed polystyrene beads, and an outer thin skin of steel fibre reinforced cementitious material made from a cement, sand and water slurry.

### SUMMARY OF THE INVENTION

Although the wood cement board described in JP 2009-242189A has the advantage of exhibiting excellent formability, its average specific gravity is 1.1 or more. In view of the workability and transportability when installing currently used wood cement boards, there is a need to further reduce weight.

Meanwhile, the lightweight, thick-hardened product described in JP S59-156705A has the advantage of being able to be produced with good productivity at a low price. However, there is a demand for a new production method that can replace production methods using a lightweight aggregate.

The present invention has been made in view of the above-described problems, and it is an object of the invention to provide a method for producing a building material that is lightweight and exhibits excellent form ability.

The present invention relates to a method for producing a building material, including: a first step of curing a core layer material including a hydraulic material, a silica-containing material, and an aluminum powder to form a foamed core layer, the aluminum powder reacting and forming bubbles, and the hydraulic material and the silica-containing material being incompletely hardened; a second step of dispersing a surface layer material including a hydraulic material, and a silica-containing material, to form an unfoamed surface layer; a third step of stacking the foamed core layer on the unfoamed surface layer, to form a stack including the unfoamed surface layer and the foamed core layer; and a fourth step of pressing and curing the stack.

Described but not according to the invention is a building material including: a foamed core layer including a hydraulic material, a silica-containing material, and bubbles formed by reaction of an aluminum powder; and an unfoamed surface layer including a hydraulic material and a silica-containing material, the unfoamed surface layer being provided on the foamed core layer.

Described but not according to the invention is a building material including: a foamed core layer including a hydraulic material, a silica-containing material, and bubbles formed by reaction of an aluminum powder; an unfoamed surface layer including a hydraulic material, a silica-containing material, and a reinforcement, the unfoamed surface layer being provided on the foamed core layer; and an unfoamed back layer including a hydraulic material, a silica-containing material, and a reinforcement, the unfoamed back layer being provided under the foamed core layer.

In order to attain the above-described object, a method for producing a building material according to a first aspect includes a first step of curing a core layer material including a hydraulic material, a silica-containing material, and an aluminum powder to form a foamed core layer, the aluminum powder reacting and forming bubbles, and the hydraulic material and the silica-containing material being incompletely hardened; a second step of dispersing a surface layer material including a hydraulic material, and a silica-containing material, to form an unfoamed surface layer; a third step of stacking the foamed core layer on the unfoamed surface layer, to form a stack including the unfoamed surface layer and the foamed core layer; and a fourth step of pressing and curing the stack.

With the production method according to the first aspect, a building material that is lightweight because of the foamed core layer and exhibits excellent formability because of the unfoamed surface layer is produced.

In particular, at the time of pressing the stack, the foamed core layer is incompletely hardened by curing, whereas the unfoamed surface layer has not been cured. Therefore, the core layer is harder than the surface layer, and is less likely to be crushed. Accordingly, the resulting building material is lighter than a commonly used building material having the same thickness, such as a cement board.

In addition, the foamed core layer is in an incomplete hardened state. Accordingly, a building material with excellent adhesion between the layers is produced by forming a stack and then pressing and curing the stack.

Furthermore, a surface layer material including a hydraulic material, and a silica-containing material is dispersed to form an unfoamed surface layer, thus forming an unfoamed surface layer that has no bubbles and is denser than the foamed core layer. Consequently, a pattern including projections and recesses is favorably formed through pressing, achieving excellent formability.

Note that the incomplete hardening in the first step means a state in which the hardening of the foamed core layer has advanced to a certain degree that allows the foamed core layer to be transported onto the unfoamed surface layer, and further curing causes hardening to further advance.

As the hydraulic material, it is possible to use, for example, cement, slag, gypsum, or the like. As the silica-containing material, it is possible to use, for example, fly ash, fly ash balloon, silica sand, diatomaceous earth, silica fumes, or the like.

Examples of curing include natural curing, steam curing, and autoclave curing. Only one of these methods may be performed, or two or more of these methods may be performed.

Examples of pressing include roll pressing, filter pressing, and stack pressing. Only one of these may be performed, or two or more of these may be performed.

In a method for producing a building material according to a second aspect, in the second step, the surface layer material is dispersed on a template having a pattern including projections and recesses punched from the back.

With the method for producing a building material according to the second aspect, the surface layer material is dispersed on a template having a pattern including projections and recesses punched from the back, thus favorably forming the pattern including projections and recesses on the surface of the unfoamed surface layer and producing a building material with excellent design.

In a method for producing a building material according to a third aspect, in the second step, the unfoamed surface layer is pressed.

With the method for producing a building material according to the second aspect, before stacking the foamed core layer, the unfoamed surface layer is pressed in advance in the second step, to stack the foamed core layer, and is pressed again in the fourth step. Accordingly, in the resulting building material, only the unfoamed surface layer is pressed twice. Therefore, the production method achieves an even more dense surface layer and excellent formability.

In a method for producing a building material according to a fourth aspect, in the second step, the surface layer material includes a reinforcement.

It is possible to use pulp, wood meal, wood flake, synthetic fiber, or the like as the reinforcement.

With the method for producing a building material according to the third aspect, a surface layer material including a hydraulic material, a silica-containing material, and a reinforcement is dispersed to form an unfoamed surface layer, thus reinforcing the surface of the produced building material. For example, the building material has increased flexibility, and thus is less likely to be damaged.

In a method for producing a building material according to a fifth aspect, the third step further includes a step of dispersing, on the foamed core layer, a back layer material including a hydraulic material, a silica-containing material, and a reinforcement, to form an unfoamed back layer.

With the method for producing a building material according to the fourth aspect, a back layer material including a hydraulic material, a silica-containing material, and a reinforcement is dispersed to form an unfoamed back layer, thus reinforcing the back surface of the produced building material. For example, when the building material is transported by two operators holding end portions in the longitudinal direction, there is concern that cracking will occur as result of a tensile stress being generated in the vicinity of the center of the building material. However, with the building material according to the fifth aspect, the building material has increased flexibility and thus is less likely to be damaged

A building material described but not according to the invention includes a foamed core layer including a hydraulic material, a silica-containing material, and bubbles formed by reaction of an aluminum powder; and an unfoamed surface layer including a hydraulic material and a silica-containing material, the unfoamed surface layer being provided on the foamed core layer.

With the building material described and not according to the invention, weight reduction of the building material is achieved by a structure in which the unfoamed surface layer is stacked on the foamed core layer including bubbles formed by the reaction of an aluminum powder.

Further, since the unfoamed surface layer including a hydraulic material and a silica-containing material is formed on the surface of the foamed core layer, an unfoamed surface layer that has no bubbles and is denser than the foamed core layer is present, thus achieving excellent formability.

In a building material described, the unfoamed surface layer may include a reinforcement.

With the building material described, the surface of the building material is reinforced by a reinforcement. For example, the building material has increased flexibility and is less likely to be damaged

In a building material described, the reinforcement may be at least one selected from pulp, wood meal, wood flake, and synthetic fiber.

The building material described is preferable in that the building material has increased flexibility and is inhibited from being damaged.

In a building material described, the foamed core layer may have a thickness larger than a thickness of the unfoamed surface layer.

With the building material described, the foamed core layer having a large number of bubbles may be the thickest among the layers constituting the building material, thus achieving further weight reduction.

A building material described may include a foamed core layer including a hydraulic material, a silica-containing material, and bubbles formed by reaction of an aluminum powder; an unfoamed surface layer including a hydraulic material, a silica-containing material, and a reinforcement, the unfoamed surface layer being provided on the foamed core layer; and an unfoamed back layer including a hydraulic material, a silica-containing material, and a reinforcement, the unfoamed back layer being provided under the foamed core layer.

With the building material described, weight reduction of the building material may be achieved by a structure in which the unfoamed surface layer is stacked on the foamed core layer including bubbles formed by the reaction of an aluminum powder.

Further, since the unfoamed surface layer including a hydraulic material, a silica-containing material, and a reinforcement is formed on the surface of the foamed core layer, an unfoamed surface layer that has no bubbles and is denser than the foamed core layer is present, thus achieving excellent formability.

Since the unfoamed back layer is formed on the back surface of the foamed core layer, the building material is reinforced, achieving an effect of inhibiting damage during transportation.

Here, to attach the building material to another building material that is adjacent thereto, projecting portions called shiplap portions may be provided on the surface side of a side end portion of the building material and the back surface side of the side end portion. Since the building material described may include dense unfoamed layers on both the surface side and the back surface side, it is possible to form shiplap portions having sufficient strength.

In a building material described, the foamed core layer may have a thickness that is largest among thicknesses of the layers constituting the building material, and the unfoamed back layer has a thickness greater than or equal to a thickness of the unfoamed surface layer.

With the building material described, the foamed core layer may be thicker than the unfoamed surface layer and the unfoamed back layer, so that the foamed core layer having a large number of bubbles is the thickest among the layers constituting the building material, thus achieving further weight reduction. Furthermore, the unfoamed back layer has a thickness greater than or equal to the thickness of the unfoamed surface layer, so that cracking is even more less likely to occur in the unfoamed back layer, further increasing the effect of inhibiting damage during transportation.

In a building material described, a ratio of a mass of the unfoamed surface layer: a mass of the foamed core layer: a mass of the unfoamed back layer may be 10 to 20:45 to 70:15 to 45.

With the building material described, the ratio of the masses of the unfoamed surface layer, the foamed core layer, and the unfoamed back layer may be within the above-described numerical value range, and therefore, it is possible to provide a building material that is lightweight, exhibits excellent formability, and provides an excellent effect of inhibiting damage during transportation.

With a method for producing the building material according to the present invention, a building material that is lightweight and exhibits excellent formability is provided by producing a building material having a structure in which an unfoamed surface layer is stacked onto a foamed core layer including bubbles formed therein.

### BRIEF DESCRIPTION OF THE DRAWINGS

FIG. 1 is a vertical cross-sectional view of Embodiment 1 of a building material according to the present invention.
FIG. 2 is a vertical cross-sectional view of Embodiment 2 of a building material according to the present invention.

### DESCRIPTION OF THE PREFERRED EMBODIMENTS

Hereinafter, embodiments of a building material and a method for producing the same will be described with reference to the drawings. Embodiment 1 of building material

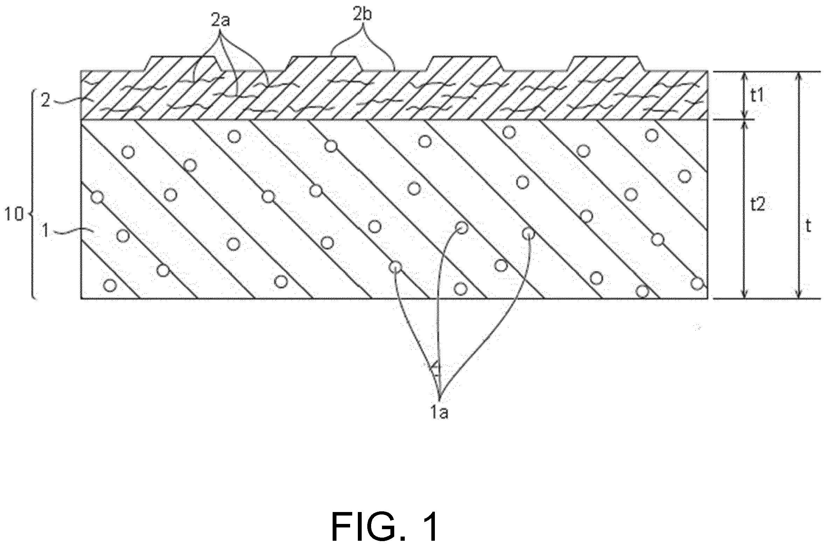

FIG. 1 is a cross-sectional view of Embodiment 1 of a building material not part of the present invention. A building material 10 shown has a structure in which an unfoamed surface layer 2 is stacked onto a foamed core layer 1.

The foamed core layer 1 is made of a material including at least a hydraulic material such as cement, slag, or gypsum; and a silica-containing material such as fly ash, fly ash balloon, silica sand, diatomaceous earth, and silica fumes, and includes bubbles 1a therein formed by the reaction of an aluminum powder.

The unfoamed surface layer 2 is made of a material including a hydraulic material such as cement, slag, or gypsum; a silica-containing material such as fly ash, fly ash balloon, silica sand, diatomaceous earth, or silica fumes; and a reinforcement such as pulp, wood meal, wood flake, or synthetic fiber. Here, wood flakes are formed by cutting wood into fine flakes, that have, for example, a particle diameter of about 2 to about 5 mm, and a thickness of about 1 to about 2 mm. In addition to these, one or more of an inorganic admixture such as mica, pearlite, bentonite, wollastonite, pulp sludge ash, or biomass ash and an organic admixture such as acrylic resin, animal and vegetable fats and oils, succinic acid-based resin, silicone resin, or silane-based resin may be blended as needed.

A pattern including projections and recesses 2b is formed on the surface (the surface opposite from the foamed core layer 1) of the unfoamed surface layer 2.

The planar shape of the building material 10 is rectangular, for example, and has a length in the longitudinal direction of about 1.8 to about 3.0 m, and a length in the lateral direction of about 0.5 m, and has a thickness within the range of about 14 to about 25 mm.

For the building material 10, the unfoamed surface layer 2 has a thickness t1, and the foamed core layer 1 has a thickness t2.

The thickness t2 of the foamed core layer 1 is larger than the thickness t1 of the unfoamed surface layer 2. Since the thickness t2 of the foamed core layer 1 including the bubbles 1a is the largest of the two component layers, further weight reduction can be achieved.

Then, for the building material 10, the ratio of the mass of the unfoamed surface layer 2 and the mass of the foamed core layer 1 is set to 10 to 45: 55 to 90.

The building material 10 is a building material that has a structure in which the unfoamed surface layer 2 is stacked on the foamed core layer 1 containing a larger number of bubbles 1a, and for which a significant weight reduction has been achieved.

Since the unfoamed surface layer 2 including a hydraulic material, silica-containing material, and a reinforcement 2a is formed on the surface of the foamed core layer 1, a surface layer that has no bubbles and is dense is achieved. Accordingly, the building material 10 is a building material with a surface pattern such as a pattern including projections and recesses favorably formed thereon and exhibits excellent formability.

### Embodiment 2 of building material

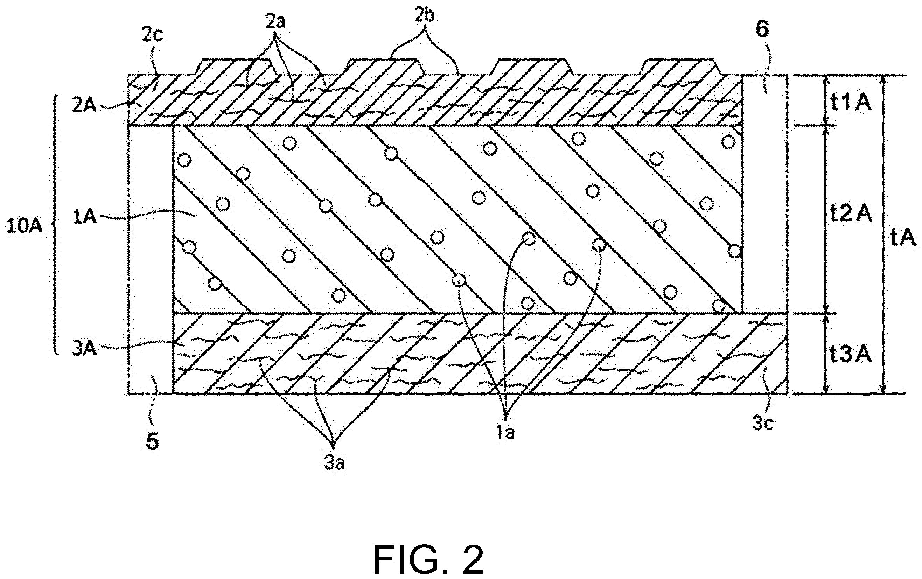

FIG. 2 is a cross-sectional view of Embodiment 2 of a building material not part of the present invention. A building material 10A shown is different from the building material 10 in FIG. 1 in that a foamed core layer 1A is stacked onto an unfoamed back layer 3A. The building material 10A has a structure in which an unfoamed surface layer 2A and the unfoamed back layer 3A are formed on opposite sides of the foamed core layer 1A.

The foamed core layer 1A is made of the same materials as the foamed core layer 1 of FIG. 1, and the unfoamed surface layer 2A is made of the same materials as the unfoamed surface layer 2 in FIG. 1.

The unfoamed back layer 3A is made of a material including a hydraulic material such as cement, slag, or gypsum; and a silica-containing material such as fly ash, fly ash balloon, silica sand, diatomaceous earth, or silica fumes; and a reinforcement such as pulp, wood meal, wood flake, or synthetic fiber. Here, wood flake is formed by cutting wood into fine flakes, and, for example, has a particle diameter of about 2 to about 5 mm, and a thickness of about 1 to about 2 mm. In addition to these, one or more of an inorganic admixture such as mica, pearlite, bentonite, wollastonite, pulp sludge ash, or biomass ash; and an organic admixture such as acrylic resin, animal and vegetable fats and oils, succinic acid-based resin, silicone resin, or silane-based resin may be blended as needed.

A pattern including projections and recesses 2b is formed on the surface (the surface opposite from the foamed core layer 1A) of the unfoamed surface layer 2A.

The planar shape of the building material 10A is rectangular, for example, and has a length in the longitudinal direction of about 1.8 to about 3.0 m, and a length in the lateral direction of about 0.5 m, and its thickness tA is within the rage of about 14 to about 25 mm.

In the building material 10A, the unfoamed surface layer 2A has a thickness t1A, the foamed core layer 1A has a thickness t2A, and the unfoamed back layer 3A has a thickness t3A.

Then, the thickness t2A of the foamed core layer 1A is larger than the thickness t1A of the unfoamed surface layer 2A and the thickness t3A of the unfoamed back layer 3A, and the thickness t3A of the unfoamed back layer 3A is the same or larger than the thickness t1A of the unfoamed surface layer 2A. Accordingly, cracking is even more less likely to occur in the unfoamed back layer 3A, and the damage inhibiting effect during transportation is even higher.

For the building material 10A, the ratio of the mass of the unfoamed surface layer 2A: the mass of the foamed core layer 1A: the mass of the unfoamed back layer 3Ais set to 10 to 20:45 to 70:15 to 45.

Here, to attach the building material 10A to another building material that is adjacent thereto, an upper shiplap portion 2c is provided on the surface side of a side end portion of the building material 10A and a lower shiplap portion 3c is provided on the back surface side of the side end portion. The upper shiplap portion 2c and the lower shiplap portion 3c are provided by pressing and curing the building material 10A, and subsequently cutting out portions of the side end portion.

Since the unfoamed back layer 3Ais formed on the back surface of the foamed core layer 1A of the building material 10A, the flexibility of the building material 10A is increased. In general, building materials are transported, for example, by a method in which the building material is transported by two operators holding end portions in the longitudinal direction thereof. Since the flexibility of the building material 10A is increased by the unfoamed back layer 3A, the building material 10A is inhibited from being damaged due to the occurrence of cracking as a result of a tensile stress being generated in the vicinity of the center of the building material during transportation.

Thus, the unfoamed surface layer 2A and the unfoamed back layer 3A are made of the same materials, but the unfoamed surface layer 2A contributes to the formability of the surface pattern including projections and recesses, and the unfoamed back layer 3A contributes to good transportability provided by the flexibility of the building material 10A.

Since the thickness t2A of the foamed core layer 1A including the bubbles 1a is largest among the three layers constituting the building material 10A, a further weight reduction can be achieved.

### Production method of Embodiment 1 of building material

Next, a method for producing the building material 10 will be described. First, a core layer material including a hydraulic material, a silica-containing material, and an aluminum powder is cured, to react the aluminum powder and form bubbles, and incompletely harden the hydraulic material and the silica-containing material, to form a foamed core layer 1 (first step).

The foamed core layer 1 is a hardened article, but is in an incomplete hardened state in which further curing causes hardening to further advance. Accordingly, the foamed core layer 1 is caused to adhere to the unfoamed surface layer 2 by being further cured in a subsequent step.

Examples of curing include steam curing and autoclave curing. The curing in the present step is curing in which the core layer material is incompletely hardened. One example thereof is steam curing at 40 to 60°C for 3 to 10 hours.

Note that the present step may be performed simultaneously with or separately from a second step, which will be described below.

Next, a surface layer material including a hydraulic material, a silica-containing material, and a reinforcement is dispersed on a template having a pattern including projections and recesses punched from the back, to form an unfoamed surface layer 2 (second step).

Here, the surface layer material may or may not be pressed after being dispersed, but pressing makes the unfoamed surface layer 2 denser, and allows the pattern including projections and recesses 2b to be even more favorably formed on the surface of the unfoamed surface layer 2.

Preferably, pressing in the second step is performed on the entire unfoamed surface layer 2. The pressing pressure during pressing is not particularly limited, and pressing may be performed at 0.5 to 2.0 MPa, for example.

Next, the foamed core layer 1 is stacked on the unfoamed surface layer 2 formed in the second step, to form a stack composed of the unfoamed surface layer 2 and the foamed core layer 1 (third step).

Finally, the stack is pressed and cured, to produce a building material 10 shown in FIG. 1 (fourth step).

Pressing is performed on the entire stack, and the pressing pressure is 0.5 to 1.0 MPa, for example.

Preferably, the pressing pressure in the fourth step is lower than the pressing pressure in the second step. This allows the bubbles in the foamed core layer 1 to be favorably held so as to make the unfoamed surface layer 2 denser, and makes the adhesion between the layers even more favorable in the cured building material 10.

Examples of curing include natural curing, steam curing, and autoclave curing. Autoclave curing can achieve good adhesion between the foamed core layer 1 and the unfoamed surface layer 2. Autoclave curing after steam curing can achieve better adhesion between the foamed core layer 1 and the unfoamed surface layer 2.

### Production method of Embodiment 2 of building material

Next, a method for producing the building material 10A will be described. Here, the first step and the second step are the same as those in the production method of Embodiment 1.

Next, the foamed core layer 1A formed in the first step is stacked on the unfoamed surface layer 2A formed in the second step (third step).

Next, a back layer material including a hydraulic material, a silica-containing material, and a reinforcement is dispersed on the foamed core layer 1A, to form an unfoamed back layer 3A. Consequently, a stack composed of the unfoamed surface layer 2A, the foamed core layer 1A, and the unfoamed back layer 3Ais formed (fourth step).

Finally, the stack formed in the fourth step is pressed and cured, to produce a building material 10A as shown in FIG. 2 (fifth step).

Pressing in the fifth step is performed on the entire stack. The pressing pressure is 0.5 to 1.0 MPa, for example.

Preferably, the pressing pressure during pressing in the fifth step is smaller than the pressing pressure during pressing in the second step. This allows the bubbles in the foamed core layer 1A to be favorably held so as to make the unfoamed surface layer 2A denser, and makes the adhesion between the layers of the cured building material 10A more favorable.

Examples of curing include natural curing, steam curing, and autoclave curing. Autoclave curing achieve good adhesion between the foamed core layer 1A and the unfoamed surface layer 2A, and good adhesion between the foamed core layer 1A and the unfoamed back layer 3A. Autoclave curing after steam curing achieves better adhesion between the foamed core layer 1A and the unfoamed surface layer 2A, and better adhesion between the foamed core layer 1A and the unfoamed back layer 3A.

### Experiment to verify lightweightness and formability, and results thereof

The present inventors produced building materials according to Samples 1 to 12, and verified the lightweightness, formability, and transportability of each of the building materials.

The materials used to make the surface layer, the core layer, and the back layer, the mass ratio of the surface layer, the core layer, and the back layer, and whether or not pressing was performed after dispersing the surface layer material for each of the building materials are as shown in Table 1 below.

To produce each of the building materials, a surface layer material was dispersed on a template having a depth of 4 mm and an inclination angle of 55 degrees and having a brick pattern punched from the back, to form a surface layer. Then, a core layer was stacked on the surface layer. Then, a back layer material was dispersed on the core layer, to form a back layer, which was stack-pressed at a pressure of 0.7 MPa, and then steam-cured at a temperature of 60°C for 10 hours in the pressed state. Thereafter, the stack was cured in an autoclave at a pressure of 0.6 MPa and a temperature of 165°C for 7 hours, to give 18 mm thick building materials according to Sample 1 to 8 and 10. Although some of the building materials of Samples 9, 11, and 12 did not include the core layer, or the surface layer and the back layer, all of these samples had a thickness of 18 mm, and the pressing conditions and the curing conditions were also the same.

To form the core layer, a core layer material including a hydraulic material, a silica-containing material, and an aluminum powder was kneaded with water (in an amount of 60 to 70% based on the solid content) with the lowest temperature set to 20°C. After being sufficiently stirred, the resulting mixture was charged into a mold, and heated and cured at about 40 to 60°C so as not to evaporate water, to form a core layer. The resulting core layer was released from the mold, and moved and stacked on the surface layer.

For Samples 1 and 3 to 9 in Table 1, the surface layer material was dispersed on the template, and thereafter the entire surface layer was pressed at a pressure of 1.5 MPa, followed by stacking the core layer thereon. On the other hand, for Samples 2 and 10, the surface layer material was dispersed on the template, and thereafter, the next step was performed without performing pressing. Note that a crushed article of mica and remnants of a wood cement board was used at a mass ratio of 7:5 as the inorganic admixture.

Table 1 below shows the ratios of the materials in the layers, the mass ratio of the surface layer, the core layer, and the back layer, whether or not pressing was performed after dispersion of the surface layer material, along with the verification results of the lightweightness and the formability.

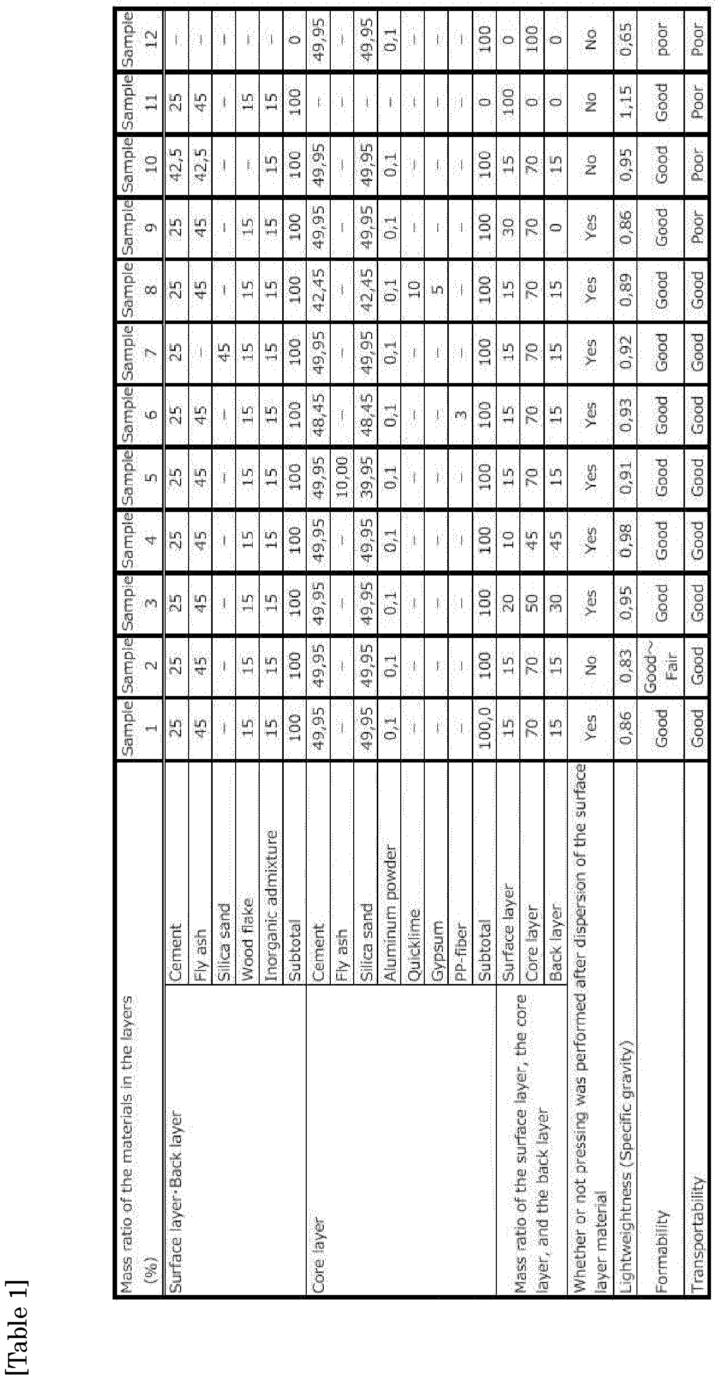

In Table 1, for the formability, the surface of each of the samples was visually observed, and the samples on which a brick pattern of the template was expressed was evaluated to be "Good", the samples on which the brick pattern was expressed, but nest-like holes were seen were evaluated to be "Fair", and the samples on which a brick pattern was not expressed or the samples having a significant defect such as cracks were evaluated to be "Poor".

Table 1 shows that each of Samples 1 to 10 had a specific gravity of less than 1.0, thus achieving favorable results for both the lightweightness and the formability. Note that Sample 2 was evaluated to be "Good" to "Fair" because the brick pattern was expressed although some nest-like holes were seen in a part of the surface layer.

On the other hand, for Samples 11 and 12, Sample 11 had a specific gravity larger than 1.0 and thus was unfavorable in terms of lightweightness, and Sample 12 exhibited poor formability.

Samples 1 to 12 were also evaluated for the transportability, and the results are shown in Table 1. As for the transportability, with opposite ends in the longitudinal direction of each of the samples being held and raised 1 m above the ground, each of the samples was transported by 10 m in the transverse direction. Subsequently, the state of each of the samples was visually checked. The samples that had not undergone any change such as a damage were evaluated to be "Good", and the samples that showed cracks or a damage were evaluated to be "Poor". Consequently, Samples 1 to 8 achieved favorable results for the transportability.

The results of the present experiment demonstrate that a preferable range of the ratio of the mass of the surface layer: the mass of the core layer: and the mass of the back layer is 10 to 20:45 to 70:15 to 45 for a sample composed of a surface layer including wood flake, a core layer including bubbles formed therein, and a back layer including wood flake.

The results also demonstrate that a sample for which the surface layer material was dispersed on the template, and thereafter the entire surface layer was pressed, followed by stacking the core layer thereon exhibits excellent formability and is preferable.

Embodiments of the present invention have been described above in detail with reference to the drawings. However, the specific configuration of the present invention is not limited to the embodiments, and design modifications and the like can be made without departing from the scope of the appended claims.

### LIST OF REFERENCE NUMERALS

- 1, 1A: Foamed core layer
- 1a: Bubbles
- 2, 2A: Unfoamed surface layer
- 2a: Reinforcement
- 2b: Pattern including projections and recesses
- 3A: Unfoamed back layer
- 3a: Reinforcement
- 10,: 10ABuilding material
- 2c: Upper shiplap portion
- 3c: Lower shiplap portion
- 5, 6: Cut portions

## Claims

1. A method for producing a building material, comprising:
a first step of curing a core layer material including a hydraulic material, a silica-containing material, and an aluminum powder to form a foamed core layer (1, 1A), the aluminum powder reacting and forming bubbles (1a), and the hydraulic material and the silica-containing material being incompletely hardened;
a second step of dispersing a surface layer material including a hydraulic material, and a silica-containing material, to form an unfoamed surface layer (2,2A);
a third step of stacking the foamed core layer (1,1A) onto the unfoamed surface layer (2,2A), to form a stack including the unfoamed surface layer (2,2A) and the foamed core layer (1, 1A); and
a fourth step of pressing and curing the stack.

2. The method for producing a building material according to claim 1, wherein,
in the second step, the surface layer material is dispersed on a template having a pattern including projections and recesses punched from back.

3. The method for producing a building material according to claim 1 or 2, wherein,
in the second step, the unfoamed surface layer (2,2A) is pressed.

4. The method for producing a building material according to any one of claim 1, 2, and 3, wherein,
in the second step, the surface layer material includes a reinforcement (2a).

5. The method for producing a building material according to any one of claims 1, 2, 3, and 4, wherein
the third step further includes a step of dispersing, on the foamed core layer (1A), a back layer material including a hydraulic material, a silica-containing material, and a reinforcement, to form an unfoamed back layer (3A).

6. The method for producing a building material according to claim 3, wherein
the pressing pressure in the fourth step is lower than the pressing pressure in the second step.

## Patentansprüche

1. Verfahren zum Herstellen eines Baumaterials, umfassend:
einen ersten Schritt zum Aushärten eines Kernschichtmaterials, das ein hydraulisches Material, ein siliziumdioxidhaltiges Material und ein Aluminiumpulver umfasst, um eine geschäumte Kernschicht (1, 1A) zu bilden, wobei das Aluminiumpulver reagiert und Blasen (1A) bildet und das hydraulische Material und das siliziumdioxidhaltige Material unvollständig gehärtet werden;
einen zweiten Schritt zum Dispergieren eines Oberflächenschichtmaterials, das ein hydraulisches Material und ein siliziumdioxidhaltiges Material umfasst, um eine ungeschäumte Oberflächenschicht (2, 2A) zu bilden;
einen dritten Schritt zum Stapeln der geschäumten Kernschicht (1, 1A) auf die ungeschäumte Oberflächenschicht (2, 2A), um einen Stapel zu bilden, der die ungeschäumte Oberflächenschicht (2, 2A) und die geschäumte Kernschicht (1, 1A) umfasst; und
einen vierten Schritt zum Pressen und Aushärten des Stapels.

2. Verfahren zum Herstellen eines Baumaterials nach Anspruch 1, wobei,
in dem zweiten Schritt, das Oberflächenschichtmaterial auf einer Matrize mit einem Muster dispergiert wird, das von hinten gestanzte Vorsprünge und Vertiefungen umfasst.

3. Verfahren zum Herstellen eines Baumaterials nach Anspruch 1 oder 2, wobei,
in dem zweiten Schritt, die ungeschäumte Oberflächenschicht (2, 2A) gepresst wird.

4. Verfahren zum Herstellen eines Baumaterials nach einem der Ansprüche 1, 2 und 3, wobei,
in dem zweiten Schritt, das Oberflächenschichtmaterial eine Verstärkung (2a) umfasst.

5. Verfahren zum Herstellen eines Baumaterials nach einem der Ansprüche 1, 2, 3 und 4, wobei
der dritte Schritt ferner einen Schritt zum Dispergieren eines Rückschichtmaterials, das ein hydraulisches Material, ein siliziumdioxidhaltiges Material und eine Verstärkung umfasst, auf der geschäumten Kernschicht (1A) umfasst, um eine ungeschäumte Rückschicht (3A) zu bilden.

6. Verfahren zum Herstellen eines Baumaterials nach Anspruch 3, wobei
der Pressdruck in dem vierten Schritt niedriger ist als der Pressdruck in dem zweiten Schritt.

## Revendications

1. Procédé de production d'un matériau de construction, comprenant :
une première étape de cure d'un matériau de couche d'âme comportant un matériau hydraulique, un matériau contenant de la silice, et une poudre d'aluminium pour former une couche d'âme expansée (1, 1A), la poudre d'aluminium réagissant et formant des bulles (1a), et le matériau hydraulique et le matériau contenant de la silice étant incomplètement durcis ;
une deuxième étape de dispersion d'un matériau de couche de surface comportant un matériau hydraulique, et un matériau contenant de la silice, pour former une couche de surface non expansée (2, 2A) ;
une troisième étape d'empilement de la couche d'âme expansée (1, 1A) sur la couche de surface non expansée (2, 2A), pour former un empilement comportant la couche de surface non expansée (2, 2A) et la couche d' âme expansée (1, 1A) ; et
une quatrième étape de pressage et de cure de l'empilement.

2. Procédé de production d'un matériau de construction selon la revendication 1, dans lequel,
à la deuxième étape, le matériau de couche de surface est dispersé sur un gabarit ayant un motif comportant des saillies et des évidements poinçonnés par l'arrière.

3. Procédé de production d'un matériau de construction selon la revendication 1 ou 2, dans lequel,
à la deuxième étape, la couche de surface non expansée (2, 2A) est pressée.

4. Procédé de production d'un matériau de construction selon l'une quelconque des revendications 1, 2 et 3, dans lequel à la deuxième étape, le matériau de couche de surface comporte un renfort (2a).

5. Procédé de production d'un matériau de construction selon l'une quelconque des revendications 1, 2, 3 et 4, dans lequel
la troisième étape comporte en outre une étape de dispersion, sur la couche d'âme expansée (1A), d'une couche de matériau arrière comportant un matériau hydraulique, un matériau contenant de la silice, et un renfort, pour former une couche arrière non expansée (3A).

6. Procédé de production d'un matériau de construction selon la revendication 3, dans lequel
la pression de pressage à la quatrième étape est inférieure à la pression de pressage à la deuxième étape.
